**Europäisches Patentamt**

**European Patent Office**

**Office européen des brevets**

(19)

(11) Veröffentlichungsnummer: **0 132 686 B1**

(12) **EUROPÄISCHE PATENTSCHRIFT**

(45) Veröffentlichungstag der Patentschrift:
07.10.87

(21) Anmeldenummer: **84108035.1**

(22) Anmeldetag: **09.07.84**

(51) Int. Cl.⁴: **C 08 F 2/52,** B 05 D 5/12,
C 09 D 3/78

(54) Verfahren zum Erzeugen von Glimmpolymerisat-Schichten.

(30) Priorität: **22.07.83 DE 3326376**

(43) Veröffentlichungstag der Anmeldung:
**13.02.85 Patentblatt 85/7**

(45) Bekanntmachung des Hinweises auf die Patenterteilung:
**07.10.87 Patentblatt 87/41**

(84) Benannte Vertragsstaaten:
**AT BE CH DE FR GB IT LI NL SE**

(56) Entgegenhaltungen:
**DE - A - 2 652 383
DE - A - 3 214 804
GB - A - 2 108 133
US - A - 4 365 587**

(73) Patentinhaber: **Siemens Aktiengesellschaft Berlin und München, Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Schulte, Rolf-Winfried, Georg-Krauss-Strasse 2, D-8520 Erlangen (DE)**
Erfinder: **Kammermaier, Johann, Dr., Ziehrerstrasse 19, D-8025 Unterhaching (DE)**

## Beschreibung

Die Erfindung betrifft ein Verfahren zum Erzeugen von Glimmpolymerisat-Schichten (auf einem Substrat) aus monomeren Kohlenwasserstoffen und/oder Fluorkohlenstoffen mittels einer Hochfrequenz-Niederdruck-Glimmentladung.

Die Glimmpolymerisation, bei der – ausgehend von gasförmigen organischen Monomeren – durch Niederdruckplasmaanregung auf einem Substrat Polymere erzeugt werden, erlaubt die Herstellung dünner, gleichmässiger und porenfreier Schichten, insbesondere auch aus Monomeren, die anderweitig nicht polymerisierbar sind. Als besonders vorteilhaft zur Erzeugung von Niederdruckplasmen für die Glimmpolymerisation haben sich hochfrequente Entladungen erwiesen, und zwar im Radiofrequenzbereich (siehe: A.T. Bell in S. Veprek, M. Venugopalan «Plasma Chemistry III», Springer-Verlag Berlin Heidelberg, 1980, Seite 43 ff.), d.h. im Bereich zwischen 0,1 und 100 MHz (RF), und im Mikrowellenbereich (siehe: «J. Macromol. Sci.-Chem.» A 14(3), Seiten 321 bis 337, 1980), d.h. im Bereich zwischen 0,1 und 1 000 GHz (MW). Dabei kann nämlich die Energie in das Plasma, d.h. in den Reaktor, in dem die Glimmpolymerisation durchgeführt wird, ohne Schwierigkeiten – über Aussenleitungen – kapazitiv oder induktiv und auch über Wellenhohlleiter, wie Resonatorkavitäten, sogenannte «slow wave structures» u.s.w. eingekoppelt werden, wodurch eine reaktive Wechselwirkung zwischen den elektrisch leitenden Teilen und dem Plasma unterbunden wird.

Einen interessanten Aspekt bei der Glimmpolymerisation stellt die Herstellung solcher Schichten dar, bei denen von Kohlenwasserstoffen (CH) und Fluorkohlenstoffen bzw. Fluorcarbonen (CF) ausgegangen wird. Dabei können nämlich aus den eingesetzten organischen Monomeren, die ein breites Spektrum polymerisationsfreundlicher Verbindungen umfassen, Glimmpolymerisate mit in einem weiten Bereich spezifizierbaren Eigenschaften hergestellt werden. Mit derart hergestellten dünnen Schichten auf CH- und/oder CF-Basis lassen sich in qualitativ und quantitativ guter Ausbeute verlustarme Dielektrika, oberflächenenergiearme und damit flüssigkeitsabweisende Überzüge, empfindliche Resistschichten für Trokkenstrukturierungsprozesse in der Röntgen- und Elektronenstrahllithographie, Dünnschichtmembranen für elektromedizinische Anwendungen und Elektrete für verschiedene Anwendungszwecke herstellen.

So ist aus EP-AI-0 049 884 ein Verfahren zur Herstellung von Polymerfilmen aus Fluoralkylacrylaten auf einem Substrat mittels Plasmapolymerisation unter Verwendung eines durch eine Glimmentladung angeregten inerten Gases, wie Argon, bekannt. Die nach diesem Verfahren hergestellten Fluoralkylacrylat-Polymerfilme weisen gegenüber energiereicher Strahlung eine hohe Empfindlichkeit auf und eignen sich deshalb als Resistfilme, die zur Strukturerzeugung dienen. Beim bekannten Verfahren, kann der Polymerfilm nach der Herstellung, falls erforderlich, zusammen mit dem Substrat bei Temperaturen von 70 bis 200 °C getrocknet werden. Ferner kann der Polymerfilm nach der Strukturierung mit energiereicher Strahlung, insbesondere Elektronenstrahlen, zur Entwicklung unter vermindertem Druck auf eine Temperatur erhitzt werden, die nicht geringer ist als die Glasübergangstemperatur des entsprechenden Polymeren, beispielsweise auf eine Temperatur von 170 bzw. 190 °C (bei einem Druck von $10^{-3}$ bis $10^{-4}$ Torr).

Bei RF-Glimmentladungen kann allerdings grundsätzlich nicht vermieden werden, dass in die CH- bzw. CF-Schichten ungesättigte Strukturen und Radikale eingebaut werden, die sich bei Zutritt von Luftsauerstoff oxidativ umsetzen oder gegebenenfalls auch mit anderen reaktionsfähigen Verbindungen reagieren; dies wiederum bedingt ein chemisch verändertes Verhalten der erzeugten Schichten infolge unerwünschter oder undefinierter Polarität, beispielsweise eine Lyophilität bei der Einwirkung von Lösungsmitteln oder erhebliche Änderungen der Eigenschaften in Anwesenheit von Feuchtigkeit. Diese Tatsache ist darauf zurückzuführen, dass in RF-Plasmen aus den Monomermolekülen durch Zusammenstösse mit Elektronen ein Teil der H- bzw. F-Atome abgespalten und mit dem Gasstrom (der monomeren Komponente) abgeführt wird, damit aber auch der Schichtbildung entzogen wird. Aufgrund der im Vergleich zu den Monomeren unterstöchiometrischen H/C- bzw. F/C-Verhältnissen von < 2 (siehe dazu: E. Kay, J. Coburn und A. Dilks in S. Veprek, M. Venugopalan «Plasma Chemistry III», Springer-Verlag Berlin Heidelberg, 1980, Seite 1 ff.) verbleiben in den Schichten primär freie Valenzen der C-Atome, welche die Bildung ungesättigter Strukturen und eingefrorener Radikale zur Folge haben und damit die Instabilität in chemischer Hinsicht bedingen.

Aufgabe der Erfindung ist es, ein Verfahren der eingangs genannten Art zum Erzeugen von Glimmpolymerisat-Schichten in der Weise auszugestalten, dass chemisch stabile Produkte erhalten werden.

Dies wird erfindungsgemäss dadurch erreicht, dass das Glimmpolymerisat nach der Herstellung unter Ausschluss von Luft einem Temperprozess in einer Atmosphäre von Kohlenwasserstoff- und/oder Fluorkohlenstoff-Monomeren bei Temperaturen zwischen 100 und 450 °C für die Dauer von 1 bis 10 h unterworfen wird.

Beim erfindungsgemässen Verfahren werden durch einen nachträglichen vollständigen oder partiellen Ausgleich des H- bzw. F-Defizits der primär hergestellten Glimmpolymerisate Schichten erzeugt, die in chemischer und physikalischer Hinsicht stabil sind. Bei diesem Verfahren kann gegebenenfalls kurzzeitig auch bei einer Temperatur über 450 °C getempert werden.

Alternativ zur vorstehend genannten Lösungsmöglichkeit, der sogenannten reaktiven Nachtemperung, wird die der Erfindung zugrundeliegende Aufgabe auch dadurch gelöst, dass das Substrat, auf dem das Glimmpolymerisat abgeschieden wird, während der Herstellung des Glimmpolymerisats auf Temperaturen zwischen 100 und 450 °C erhitzt wird.

Bei einer derartigen Vorgehensweise wird neben einer Stabilisierung durch Absättigung der eingefrorenen Radikale auch die Entfernung niedermolekularer flüchtiger Polymerisatanteile aus der Schicht erreicht. Im übrigen wird, bedingt durch die bei der Glimmpolymerisation herrschenden Bedingungen, auch bei dieser Alternative unter Ausschluss von Luft gearbeitet.

Beim erfindungsgemässen Verfahren wird praktisch der grundsätzliche Nachteil, der einer mit Hochfrequenz arbeitenden Glimmpolymerisation eigen ist, nämlich die chemische Instabilität der dabei (primär) erzeugten Glimmpolymerisate, dazu benutzt, um chemisch und physikalisch stabile Schichten herzustellen. Das Manko, mit dem die primär erzeugten Glimmpolymerisate behaftet sind, kann ferner aber auch genutzt werden, um Schichten herzustellen, die neben einem stabilen Charakter auch bestimmte, gezielt herstellbare Eigenschaften aufweisen.

Nach einer vorteilhaften Ausgestaltung des erfindungsgemässen Verfahrens werden dazu bei der reaktiven Nachtemperung die Kohlenwasserstoff- bzw. Fluorkohlenstoff-Monomeren wenigstens teilweise durch eine andere reaktive gasförmige Komponente ersetzt. Gegebenenfalls kann dieser reaktiven Komponente auch ein Inertgas, wie Argon, zugesetzt werden.

Als reaktive gasförmige Komponente können beim erfindungsgemässen Verfahren beispielsweise Wasserstoff oder Fluor eingesetzt werden. d.h. anorganische Komponenten; daneben kommen aber auch CH- und CF-haltige Gase in Betracht. Hierbei führen die reaktiven Komponenten, die eine Absättigung der eingefrorenen Radikale bewirken, zu unpolaren Glimmpolymerisat-Schichten mit lyophobem Charakter. Derartige Glimmpolymerisat-Schichten sind beispielsweise für Dielektrika oder als flüssigkeitsabweisende Überzüge geeignet. Den genannten reaktiven Komponenten können auch spezifische Radikalfänger, wie 1.1-Diphenylethylen, zugesetzt werden.

Als reaktive gasförmige Komponente können aber auch anorganische Verbindungen, wie Sauerstoff ($O_2$), Schwefeldioxid ($SO_2$), Wasserdampf ($H_2O$) und Gemische dieser Verbindungen oder Ammoniak ($NH_3$), sowie primäre und sekundäre Amine ($RNH_2$ bzw. $R_2NH$) eingesetzt werden. Derartige reaktive Komponenten führen zu stabilisierten polaren Glimmpolymerisat-Schichten, beispielsweise mit gezielt lyophilem bzw. hydrophilem Charakter, welche sich beispielsweise zur Verwendung als Dünnschichtmembranen eignen.

Beim erfindungsgemässen Verfahren, bei dem die Glimmpolymerisate – unter Ausschluss von Luftsauerstoff – einem nachfolgenden reaktiven Temperprozess in einer Atmosphäre aus Kohlenwasserstoff- und/oder Fluorkohlenstoffverbindungen unterworfen werden bzw. die Herstellung der Glimmpolymerisate bei erhöhter Temperatur erfolgt, werden offensichtlich die sich bildenden ungesättigten Valenzen mit Wasserstoff- bzw. Fluoratomen oder C–H- bzw. C–F-Gruppierungen abgesättigt, wodurch Schichten entstehen, die ein hohes H/C- bzw. F/C-Verhältnis aufweisen. Daneben ist bei diesem Verfahren, aufgrund der speziellen Temperaturen, aber auch gewährleistet, dass keine thermische Schädigung der Schichten erfolgt. Vielmehr kann, ähnlich wie bei Sinterprozessen, sogar ein Verfliessen der Schichten erreicht werden, was deren homogenen Charakter günstig beeinflusst.

Vorzugsweise wird beim erfindungsgemässen Verfahren bei einer Temperatur von ca. 400 °C gearbeitet. Hierbei ist die erforderliche Aufspaltung von C–H- bzw. C–F- und C–C-Bindungen in den gasförmigen Monomermolekülen in ausreichendem Masse gewährleistet, so dass auch die Reaktionsgeschwindigkeit der reaktiven Temperung ausreichend hoch ist.

Erfolgt die reaktive Temperung zeitlich nach der Erzeugung der Glimmpolymerisat-Schichten, so wird die Wärmebehandlung in einem Zeitraum zwischen 1 und 10 h durchgeführt; dabei wird vorteilhaft in der Weise vorgegangen, dass langsam auf die beim Tempern maximal angewendete Temperatur aufgeheizt, diese Temperatur relativ kurz gehalten und dann relativ schnell abgekühlt wird. Bei glimmpolymerisierten Schichten auf CH–CF-Basis kann die Temperung – zur Erzielung von Elektreteigenschaften – auch in einem elektrischen Feld durchgeführt werden.

Verlaufen die Glimmpolymerisation und die reaktive Temperung zeitlich parallel, so richtet sich die Wärmebehandlung nach der Dauer der Abscheidung des Glimmpolymerisats auf dem Substrat. Die Abscheidedauer wiederum ist abhängig von der gewünschten Schichtdicke und den Abscheidebedingungen; sie beträgt im allgemeinen zwischen 30 min und 3 h. Diese Zeit reicht bei der genannten Verfahrensweise, d.h. gleichzeitigem Verlauf von Glimmpolymerisation und Temperung, aber auch aus, um Schichten mit den gewünschten Eigenschaften zu erhalten.

Als Kohlenwasserstoff-Monomere können beim erfindungsgemässen Verfahren beispielsweise folgende Verbindungen verwendet werden: Ethylen, Propen, Buten, Butadien und Cyclohexan. Vorzugsweise werden bei diesem Verfahren perfluorierte organische Verbindungen, d.h. Fluorkohlenstoffe, eingesetzt, und zwar sowohl bei der Glimmpolymerisation als auch bei der reaktiven Temperung. Als monomere Fluorverbindung dient dabei insbesondere Octafluorcyclobutan $C_4F_8$ (Perfluorcyclobutan). Daneben kommen aber auch andere perfluorierte Kohlenwasserstoffe in Betracht, wie Tetrafluorethylen $C_2F_4$, Perfluorpropen $C_3F_6$, Perfluorbuten $C_4F_8$ und Perfluorcyclohexan $C_6F_{12}$.

Die Strömungsgeschwindigkeit des Reaktionsgases, beispielsweise der fluorhaltigen organischen Verbindung, beträgt beim erfindungsgemässen Verfahren im allgemeinen 10 bis 1 000 mbar·cm$^3$·s$^{-1}$, der Arbeitsdruck $10^{-2}$ bis 10 mbar; dies gilt nicht nur bei der «normalen» Erzeugung der Glimmpolymerisat-Schicht, sondern auch für den Fall, dass Glimmpolymerisation und reaktive Temperung gleichzeitig erfolgen. Erfolgt die reaktive Temperung zeitlich nach der Herstellung der Glimmpolymerisat-Schicht, so beträgt der Reaktionsgasdruck $10^{-2}$ bis 1 000 mbar. Die Anregungsfrequenz der Niederdruck-Glimmentladung beträgt im RF-Bereich im allgemeinen 0,1 bis 100 MHz, vorzugsweise 0,1 bis 30 MHz, und im MW-Bereich im allgemeinen 0,1 bis 1 000 GHz, vorzugsweise 0,1 bis 100 GHz.

Anhand von Ausführungsbeispielen und einer Figur, in der eine vorteilhafte Ausführungsform einer Vorrichtung zur Durchführung des erfindungsgemässen Verfahrens dargestellt ist, soll die Erfindung noch näher erläutert werden.

Die in der Figur dargestellte Vorrichtung dient zur Herstellung von Glimmpolymerisaten und zu deren reaktiven Temperung. Dazu weist diese Vorrichtung ein Entladungsrohr 1 aus Glas auf, das etwa in der Mitte – auf einem Teil seiner Länge – zu einer Entladungskammer 2 mit rechteckigem Querschnitt abgeflacht ist. Im Bereich der Entladungskammer 2 sind aussen am Rohr 1 zwei Elektroden 3 und 4 angeordnet, die, was in der Figur nicht dargestellt ist, mit einem Hochfrequenzgenerator verbunden sind. In der Entladungskammer 2 befindet sich, auf dem Boden des Entladungsrohres 1, das zu beschichtende Substrat 5, beispielsweise ein Düsenträger eines mit Flüssigkeitströpfchen arbeitenden Schreibgerätes. Das erfindungsgemässe Verfahren kann nämlich zum direkten Erzeugen einer chemisch stabilen Schicht auf dem Düsenträger eines derartigen Schreibgerätes dienen, das beispielsweise aus der DE-PS 25 27 647 bekannt ist (siehe auch DE-OS 31 14 192). Um bei diesem Schreibgerät die Benetzung der dem Aufzeichnungsträger zugewandten Seite des Düsenträgers mit Schreibflüssigkeit zu verhindern, ist bereits vorgeschlagen worden, diese Seite des Düsenträgers mit einer flüssigkeitsabweisenden Schicht aus Polyethylen oder Polytetrafluorethylen zu versehen (DE-OS 32 14 791). Ein entsprechendes Verfahren wurde in der DE-OS 32 14 804 vorgeschlagen.

Dem Entladungsrohr 1 wird durch einen Hahn 6 das Reaktionsgas zugeführt, durch einen Hahn 7 erfolgt dessen Abführung; ein Stutzen 8 am Entladungsrohr 1 dient zum Anschluss eines – in der Figur nicht dargestellten – Manometers. Am Entladungsrohr 1 ist ferner eine Glasampulle 9 vorgesehen, die nach der Beschichtung das Substrat 5 aufnehmen kann; zum Verschliessen kann die Ampulle 9 an der Engstelle 10 abgeschmolzen werden. Im Bereich der Entladungskammer 2 ist das Rohr 1 schliesslich noch mit einer Heizung, d.h. mit einem Rohrofen 11, versehen.

Beispiel 1

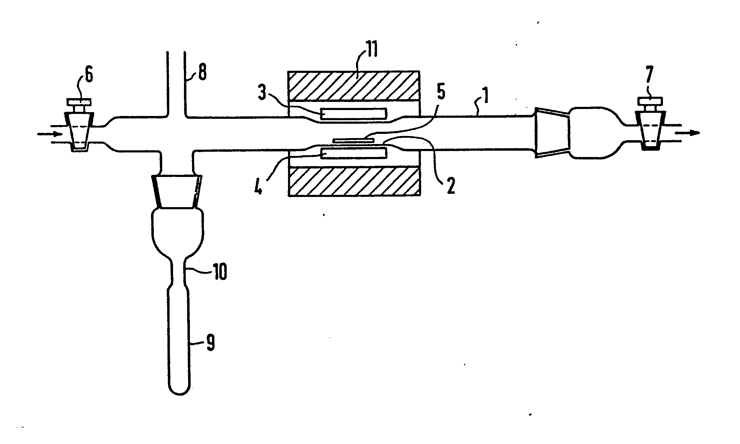

Nach dem Einbringen des zu beschichtenden Düsenträgers 5 wird das Entladungsrohr 1 (mitsamt der Ampulle 9) durch den Hahn 7 mit einer Vakuumpumpe auf ca. $10^{-3}$ mbar evakuiert. Anschliessend wird durch den Hahn 6 das Reaktionsgas, beispielsweise gasförmiges Octafluorcyclobutan, zugeführt. Dabei wird die Strömungsgeschwindigkeit mittels eines konventionellen Dosierventils, das in der Figur 1 nicht dargestellt ist, auf ca. 170 mbar·cm$^3$·s$^{-1}$ eingestellt. Mit Hilfe eines – ebenfalls nicht dargestellten – Drosselventils in der Gasabführung wird dann das Saugvermögen der Vakuumpumpe soweit herabgesetzt, dass sich ein Arbeitsdruck von ca. 0,5 mbar einstellt. Dann wird die Glimmentladung gezündet, indem an die Elektroden 3 und 4 eine vom Hochfrequenzgenerator gelieferte Hochfrequenzspannung angelegt wird; die Frequenz beträgt beispielsweise etwa 13,5 MHz. Im Verlauf von 45 min wird auf dem Düsenträger eine Schicht von ca. 3 µm Dicke gebildet.

Nach dem Abschalten der Glimmentladung wird das Entladungsrohr 1 erneut evakuiert und anschliessend zusammen mit der Ampulle 9 mit dem zum reaktiven Tempern verwendeten Reaktionsgas gefüllt, beispielsweise mit 700 mbar Octafluorcyclobutan; der Fülldruck kann aber in einem relativ weiten Bereich variiert werden. Bei geschlossenen Hähnen 6 und 7 wird das Entladungsrohr 1 dann von der übrigen Anlage getrennt und so geneigt, dass der beschichtete Düsenträger 5 in die Ampulle 9 gleitet; diese wird dann durch Abschmelzen an der Engstelle 10 verschlossen. Anschliessend wird die Ampulle 9 in einen Kammerofen gelegt und im Verlauf von 6 h auf ca. 400 °C aufgeheizt. Nach einer weiteren Stunde (Temperatur: 400 °C) wird der Ofen abgeschaltet und die Ampulle innerhalb von 1 h von 400 °C auf Raumtemperatur abgekühlt; das Öffnen der Ampulle geschieht in bekannter Weise.

Die auf dem Düsenträger befindliche Glimmpolymerisat-Schicht weist nach dem Tempern eine Schichtdicke von ca. 1 µm auf. Bei der geschilderten Verfahrensweise ist sichergestellt, dass die Schicht zwischen der Abscheidung und dem reaktiven Tempern nicht mit Luftsauerstoff in Berührung kommt und so eine Reaktion mit eingefangenen Radikalen unter Bildung lyophiler C=O-Gruppen unterbleibt.

Beispiel 2

Ein Düsenträger 5 wird entsprechend Beispiel 1 beschichtet. Der beschichtete Düsenträger wird dann jedoch nicht in die Ampulle 9 überführt, sondern er verbleibt in der Entladungskammer 2; zur Temperung dient nämlich in diesem Fall die Heizung 11. Unter Beibehaltung der Strömungsgeschwindigkeit von ca. 170 mbar·cm$^3$·s$^{-1}$ wird dazu durch eine stärkere Drosselung des Saugvermögens der Vakuumpumpe (mittels eines Drosselventils) der Octafluorcyclobutandruck im Rohr 1 auf ca. 50 mbar erhöht. Dann wird innerhalb 6 h auf ca. 400 °C aufgeheizt und nach einer weiteren Stunde – innerhalb einer Stunde – auf Raumtemperatur abgekühlt. Diese Verfahrensweise hat den Vorteil, dass niedermolekulare Zwischenprodukte, die bei der Beschichtung in die Schicht eingebaut und während des Temperns wieder freigesetzt werden, mit dem Reaktionsstrom entfernt werden können.

**Beispiel 3**

Nach dem Einbringen des zu beschichtenden Düsenträgers 5 und nach dem Evakuieren des Entladungsrohres 1 wird, wie in Beispiel 1 beschrieben, ein Octafluorcyclobutan-Durchfluss von ca. 170 mbar·cm³·s⁻¹ und ein Arbeitsdruck von ca. 0,5 mbar eingestellt. Mit Hilfe der Heizung 11 werden das Entladungsrohr 1 und der Düsenträger 5 auf ca. 400 °C aufgeheizt und auf dieser Temperatur gehalten. Nach dem Zünden der Glimmentladung erfolgt die Beschichtung des Düsenträgers dann unmittelbar bei ca. 400 °C. Nachdem die gewünschte Schichtdicke erreicht ist, wird die Entladung abgeschaltet und die Temperatur im Verlauf von einer Stunde von 400 °C auf Raumtemperatur abgesenkt. Diese Verfahrensweise hat den Vorteil, dass die beiden Prozesse, Beschichtung, d.h. Erzeugung der Glimmpolymerisat-Schicht, und reaktives Tempern, in einem Schritt erfolgen.

Die auf die vorstehend beschriebene Weise hergestellten Glimmpolymerisat-Schichten haben, wie IR-spektroskopische Untersuchungen zeigen, eine PTFE-ähnliche Zusammensetzung. ESCA-Messungen, d.h. die Ermittlung der Bindungszustände mittels Elektronen-Spektroskopie, ergeben eine F/C-Verhältnis nahe bei 2:1. Diese Schichten erweisen sich in hohem Masse als lyophob und sie sind beispielsweise auch bei längerer Einwirkung der Tintenflüssigkeit von Schreibgeräten der vorstehend genannten Art beständig.

**Patentansprüche**

1. Verfahren zum Erzeugen von Glimmpolymerisat-Schichten (auf einem Substrat) aus monomeren Kohlenwasserstoffen und/oder Fluorkohlenstoffen mittels einer Hochfrequenz-Niederdruck-Glimmentladung, dadurch gekennzeichnet, dass das Glimmpolymerisat nach der Herstellung unter Ausschluss von Luft einem Temperprozess in einer Atmosphäre von Kohlenwasserstoff- und/oder Fluorkohlenstoff-Monomeren bei Temperaturen zwischen 100 und 450 °C für die Dauer von 1 bis 10 h unterworfen wird.

2. Verfahren nach Anspruch 1, dadurch gekennzeichnet, dass der Temperprozess in einem elektrischen Feld durchgeführt wird.

3. Verfahren nach Anspruch 1, dadurch gekennzeichnet, dass die Kohlenwasserstoff- bzw. Fluorkohlenstoff-Monomeren wenigstens teilweise durch eine reaktive gasförmige Komponente ersetzt werden.

4. Verfahren nach Anspruch 3, dadurch gekennzeichnet, dass als reaktive gasförmige Komponente Wasserstoff oder Fluor eingesetzt wird.

5. Verfahren nach Anspruch 3, dadurch gekennzeichnet, dass als reaktive gasförmige Komponente Sauerstoff, Schwefeldioxid, Wasserdampf und Gemische dieser Verbindungen oder Ammoniak sowie primäre und sekundäre Amine eingesetzt werden.

6. Verfahren zum Erzeugen von Glimmpolymerisat-Schichten (auf einem Substrat) aus monomeren Kohlenwasserstoffen und/oder Fluorkohlenstoffen mittels einer Hochfrequenz-Niederdruck-Glimmentladung, dadurch gekennzeichnet, dass das Substrat während der Herstellung des Glimmpolymeriats auf Temperaturen zwischen 100 bis 450 °C erhitzt wird.

7. Verfahren nach einem der Ansprüche 1 bis 6, dadurch gekennzeichnet, dass bei einer Temperatur von ca. 400 °C gearbeitet wird.

8. Verfahren nach einem oder mehreren der Ansprüche 1 bis 7, dadurch gekennzeichnet, dass als organisches Monomeres eine perfluorierte Verbindung, insbesondere Octafluorcyclobutan, verwendet wird.

**Revendications**

1. Procédé de préparation de couches de polymères par décharge luminescente (sur un substrat), à partir d'hydrocarbures et/ou d'hydrocarbures fluorés monomères, au moyen d'une décharge luminescente de basse pression et de haute fréquence, caractérisé en ce qu'il consiste à soumettre le polymère par décharge luminescente, après la préparation, à l'abri de l'air, à un processus de recuit dans une atmosphère de monomères hydrocarbonés et/ou fluorocarbonés, à des températures comprises entre 100 et 450 °C et pendant une durée de 1 à 10 heures.

2. Procédé suivant la revendication 1, caractérisé en ce qu'il consiste à effectuer le processus de recuit dans un champ électrique.

3. Procédé suivant la revendication 1, caractérisé en ce qu'il consiste à remplacer les monomères hydrocarbonés et fluorocarbonés au moins partiellement par un constituant gazeux réactif.

4. Procédé suivant la revendication 3, caractérisé en ce qu'il consiste à mettre en œuvre, comme constituant gazeux réactif, de l'hydrogène ou du fluor.

5. Procédé suivant la revendication 3, caractérisé en ce qu'il consiste à mettre en œuvre, comme constituant gazeux réactif, de l'oxygène, du dioxyde de soufre, de la vapeur d'eau et des mélanges de ces composés, ou de l'ammoniac, ainsi que des amines primaires et secondaires.

6. Procédé de préparation de couches de polymères par décharge luminescente (sur un substrat) à partir d'hydrocarbures et/ou d'hydrocarbures fluorés monomères, à l'aide d'une décharge luminescente de basse pression et de haute fréquence, caractérisé en ce qu'il consiste à porter le substrat, pendant la préparation du polymère par décharge luminescente, à des températures comprises entre 100 et 450 °C.

7. Procédé suivant l'une des revendications 1 à 6, caractérisé en ce qu'il consiste à travailler à une température de 400 °C environ.

8. Procédé suivant l'une ou plusieurs des revendications 1 à 7, caractérisé en ce qu'il consiste à utiliser, comme monomère organique, un composé perfluoré, notamment l'octafluorocyclobutane.

**Claims**

1. A process for the production of plasma polymerized layers (on a substrate) form monomeric hydrocarbons and/or fluorocarbons by means of a high-frequency low-pressure glow discharge, characterised in that after its production, the plasma polymer is subjected to an annealing step in the absence of air, in an atmosphere of hydrocarbon and/or fluorocarbon monomers at temperatures of between 100 and 450 °C for a period of 1 to 10 hours.

2. A process as claimed in Claim 1, characterised in that the annealing process is carried out in an electric field.

3. A process as claimed in Claim 1, characterised in that the hydrocarbon and/or fluorocarbon monomers are at least partially replaced by a reactive gaseous component.

4. A process as claimed in Claim 3, characterised in that hydrogen or fluorine is used as reactive gaseous component.

5. A process as claimed in Claim 3, characterised in that oxygen, sulphur dioxide, water vapour, and mixtures of these compounds, or ammonia and primary and secondary amines, are used as reactive gaseous component.

6. A process for the production of plasma polymerized layers (on a substrate) from monomeric hydrocarbons and/or fluorocarbons by means of a high-frequency low-pressure glow discharge, characterised in that the substrate is heated to temperatures of between 100 and 450 °C during the production of the plasma polymer.

7. A process as claimed in one of Claims 1 to 6, characterised in that an operating temperature of about 400 °C is used.

8. A process as claimed in one or more of Claims 1 to 7, characterised in that a perfluorinated compound, in particular octafluorocyclobutane, is used as organic monomer.